Europäisches Patentamt

(19) European Patent Office

Office européen des brevets

(11) Publication number: **0 099 689**
**B1**

(12) **EUROPEAN PATENT SPECIFICATION**

(45) Date of publication of patent specification: **24.09.86**

(51) Int. Cl.⁴: **F 16 D 65/32**

(21) Application number: **83303868.0**

(22) Date of filing: **04.07.83**

(54) **Fluid pressure operable actuator.**

(30) Priority: **03.07.82 GB 8219320**

(43) Date of publication of application:
**01.02.84 Bulletin 84/05**

(45) Publication of the grant of the patent:
**24.09.86 Bulletin 86/39**

(84) Designated Contracting States:
**BE DE FR GB IT NL SE**

(56) References cited:
**CH-A- 533 258**
**DE-A-2 828 385**
**DE-A-2 849 404**
**FR-A-2 220 161**

(73) Proprietor: **BENDIX LIMITED**
**Douglas Road**
**Kingswood, Bristol BS15 2NL (GB)**

(72) Inventor: **Neal, Brian Patrick**
**Bendix Limited Douglas Road**
**Kingswood Bristol. BS15 2NL (GB)**
Inventor: **Wheeler, Arnold Courtney**
**Bendix Limited Douglas Road**
**Kingswood Bristol. BS15 2NL (GB)**
Inventor: **Jennison, Paul**
**Bendix Limited Douglas Road**
**Kingswood Bristol. BS15 2NL (GB)**
Inventor: **Frost, Michael Alan**
**Bendix Limited Douglas Road**
**Kingswood Bristol. BS15 2NL (GB)**

(74) Representative: **Turner, Alan Reginald**
**BENDIX LIMITED Douglas Road**
**Kingswood, Bristol BS15 2NL (GB)**

Courier Press, Leamington Spa, England.

## Description

This invention relates to fluid pressure operable spring actuators and relates especially but not exclusively to brake actuators.

In DE—A—2 828 385, a fluid pressure operable actuator is described which comprises a generally cylindrical housing. A peripheral bead of a pressure responsive diaphragm is clamped between the main body of the housing and a pressure cover. The diaphragm thereby divides the housing into a pressure chamber and a non-pressure chamber and acts via a pressure plate against a spring retained there between and the housing, stop means being provided which prevent full compression of the spring. In such an arrangement it is unsafe to remove the pressure cover to inspect or replace the diaphragm without special means for preventing full expansion of the spring and the present invention seeks to provide a satisfactory solution to this shortcoming.

The present invention provides a fluid pressure operable diaphragm spring actuator including a housing, a pressure responsive diaphragm dividing the housing into a pressure chamber and a non-pressure chamber, an actuator output rod connected to a pressure plate co-operating with the diaphragm and passing through sealing means across an aperture in the housing, a force-exerting compression spring retained in the non-pressure chamber between the pressure plate and the housing, the plate having a portion extending around the spring away from the diaphragm and being characterised by a peripheral flange engageable with inwardly projecting stop means located within a thickened portion of the wall of the chamber and whereby the plate rests against the stop means when fluid pressure is released from the pressure chamber. Preferably the stop means are pressed-in studs located in bosses.

In order that the invention may be more clearly understood and readily carried into effect, the same will be further described by way of example with reference to the accompanying drawing in which:

Fig. 1 shows a spring brake actuator and

Fig. 2 shows a possible modification of Fig. 1.

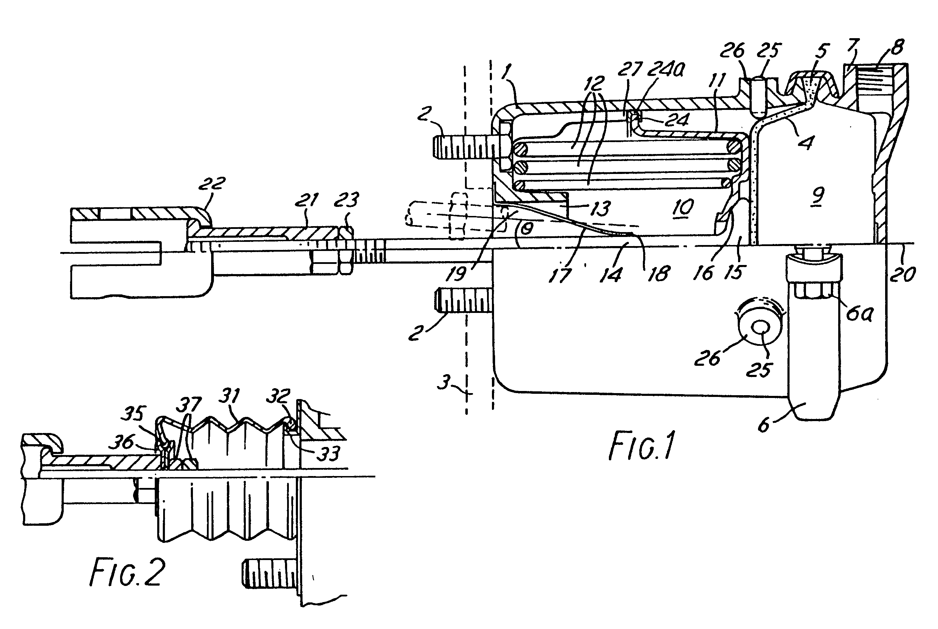

Referring to the part-sectional view of Fig. 1, the actuator comprises a housing 1 provided with three mounting studs or bolts with shaped heads which are captive in the housing to prevent rotation, two of which bolts are shown by reference 2, for mounting the actuator to a mounting bracket or chassis member 3 (shown dotted) of a vehicle for the purposes of actuating the vehicle brakes. The housing is provided with a pressure responsive member in the form of a diaphragm 4 with a peripheral bead 5 clamped between the housing 1 and a pressure cover 7 by a clamping ring 6 and bolt 6a. The cover 7 is provided with a fluid pressure input port 8 and the diaphragm therefore divides the housing into a pressure chamber 9 and a non-pressure chamber 10. The diaphragm 4 is shown in the drawing in the position which it takes up when full fluid pressure is applied at the port 8. In this position, the diaphragm acts against a dished pressure plate 11 which rests against inward ends of a plurality of internal ribs 27. Between plate 11 and the facing end of the assembly there is located a group of three concentrically arranged springs 12 under compression. This facing end of the housing is provided with an aperture 13 via which an output member in the form of a rod 14 projects outwardly of the actuator. The rod 14 passes through plate 11 and the inner end of 14 is provided with a head 15 which locates in a recess 16 of the plate 11. It is seen therefore that the release of air from the chamber 9 is able to place the output rod 14 in tension. Furthermore, the output rod 14 is pivotally moveable through a range of angles as indicated by the angle θ by virtue of the arrangement of the head 15 and the recess 16.

In order to accommodate the above mentioned range of angular movement for the rod 14 but at the same time provide for the exclusion of contaminants into the actuator itself, a generally conical dirt exclusion member 17 is provided which has a smaller inner end 18 making sealingly slideable engagement with the rod 14 and a larger outer end 19 sealingly located within the aperture 13 the diameter of which is chosen to permit the desired amount of angular movement. The material of the dirt exclusion member 17 is chosen to be sufficiently flexible to permit the desired amount of lateral movement of the end 18 in relation to the end 19 resulting from movement of the line of action of the actuator rod 14 through the angle θ on either side of the central axis 20 of the assembly. The outer end of the actuator rod 14 may be connected to a brake mechanisms by a suitable screw thimble 21 and a rotatable yoke 22 and thimble 21 preferably being provided with a locking nut 23.

The plate 11 is provided with a peripheral rim or flange 24 with a protective moulded plastic bead 24a. In the fully retracted position thereof when there is no pressure applied to the input port 8 this flange is engageable with three inwardly projecting members 25. Not only does this prevent the possibility of damage to the diaphragm by engagement with the inside of cover 7 but it also prevents the possibility of dangerous release of the potential energy of the spring by inadvertant removal of the pressure cover 7. Preferably, the inward projections 25 are in the form of pressed-in studs located in bosses such as 26 cast into the housing so that they cannot be removed from externally of the actuator.

Whilst the embodiment of the invention shown in Fig. 1 employs a generally conical internal seal 17 across the aperture 13, within which the rod 14 is sealingly slideable, an alternative and compact form of seal may be provided by a flexible gaiter or bellows such as shown in Fig. 2. The gaiter or bellows 31 has an inner end with a bead 32 retained by an annular rim 33 of a retaining plate 34 held in place by the mounting studs. The outer end has a bead 35 which is retained by a pair of members 36 the peripheries of which are shaped to form a recess, the members 36 being clamped in position by locking nuts 37 for locking the adjustment thimble on the rod. Access to the locating nut for adjustment is readily provided by removing bead 35 from member 36.

By employing plurality of springs 12 in the embodiment described the actuator is capable of developing a high output force whilst employing relatively non-critical constructions of low-rate springs. The facility to provide a multiplicity of actuator outputs by employing different combinations of springs.

When the actuator is used as a parking brake actuator for a vehicle braking system the actuator force may be released by adjustment of the thimble 21 which is rotatable in joke 22, or in the case of Fig. 2 the thimble rotatable in yoke.

## Claims

1. A fluid pressure operable diaphragm spring actuator including a housing (1), a pressure responsive diaphragm (4) dividing the housing into a pressure chamber (9) and a non-pressure chamber (10), an actuator output rod (14) connected to a pressure plate (11) co-operating with the diaphragm and passing through sealing means across an aperture (13) in the housing, a force-exerting compression spring (12) retained in the non-pressure chamber (10) between the pressure plate and the housing, the plate (11) having a portion extending around the spring away from the diaphragm (4) and being characterised by a peripheral flange (24) engageable with inwardly projecting stop means (25) located within a thickened portion (26) of the wall of the chamber and whereby the plate (11) rests against the stop means (25) when fluid pressure is released from the pressure chamber (9).

2. An actuator as claimed in claim 1 characterised in that said stop means are pressed-in studs (25) located in bosses (26).

## Patentansprüche

1. Mit Fluid-Druck steuerbare Membran-Feder-Betätigungsvorrichtung, umfassend ein Gehäuse (1), eine auf Druck ansprechende Membran (4), welche das Gehäuse in eine Druckkammer (9) und eine drucklose Kammer (10) unterteilt, eine Ausgangsstange (14) der Betätigungsvorrichtung, die mit einer Druckplatte (11) verbunden ist, welche mit der Membran zusammenarbeitet und durch eine Dichtungseinrichtung an einer Öffnung (13) in dem Gehäuse hindurchgeht, und eine kraftausübende Druckfeder (12), die in der drucklösen Kammer (10) zwischen der Druckplatte und dem Gehäuse gehalten ist, wobei die Platte (11) einen Abschnitte hat, der sich rund um die Feder von der Membran (4) weg erstreckt, gekennzeichnet durch einen Umfangsflansch (24), der mit nach innen vorragenden Anschlagmitteln (25) in Eingriff treten kann, die in einem verdickten Teil (26) der Wand der Kammer angeordnet sind, wobei die Platte (11) an den Anschlagmitteln (25) ruht, wenn der Fluid-Druck von der Druckkammer (9) freigegeben ist.

2. Betätigungsvorrichtung nach Anspruch 1, dadurch gekennzeichnet, daß die Anschlagmittel eingepreßte Zapfen (25) sind, die in Vorsprüngen (26) angeordnet sind.

## Revendications

1. Dispositif d'actionnement à ressort avec diaphragme à commande par pression de fluide comprenant un carter (1), un diaphragme (4) sensible à la pression divisant la carter en une chamber de pression (9) et une chambre de non-pression (10), une tige (14) de sortie du dispositif d'actionnement raccordée à une plaque de pression (11) coopérant avec le diaphragme et passant à travers des moyens d'étanchéité logés dans une ouverture (13) du carter, un ressort comprimé (12) exerçant un effort retenu dans la chambre de non-pression (10) entre la plaque de pression et le carter, la plaque (11) comportant une portion qui s'étend autour du ressort à distance du diaphragme (4) et étant caractérisé par une bride périphérique (24) pouvant s'appliquer sur des moyens d'arrêt (25) saillant vers l'intérieur situés à l'intérieur d'une partie épaissie (26) de la paroi de la chambre et par laquelle la plaque (11) prend appui sur les moyens d'arrêt (25) lorsque la pression de fluide est supprimée dans la chambre de pression (9).

2. Dispositif d'actionnement suivant la revendication 1, caractérisé en ce que lesdits moyens d'arrêt sont des goujons (25) posés à la presse dans des bossages (26).

FIG.1

FIG.2

689 660 0